(19) Europäisches Patentamt
European Patent Office
Office européen des brevets

(11) EP 4 520 773 A1

(12) EUROPEAN PATENT APPLICATION
published in accordance with Art. 153(4) EPC

(43) Date of publication:
**12.03.2025 Bulletin 2025/11**

(21) Application number: **23828141.4**

(22) Date of filing: **14.07.2023**

(51) International Patent Classification (IPC):
*C08G 18/40* (2006.01) *C08G 18/00* (2006.01)
*C08G 18/06* (2006.01) *C08K 5/138* (2006.01)
*C08K 5/22* (2006.01) *C08G 18/24* (2006.01)
*C08G 18/32* (2006.01) *C08G 18/48* (2006.01)
*C08G 18/66* (2006.01) *C08G 18/76* (2006.01)

(52) Cooperative Patent Classification (CPC):
**C08G 18/4854; C08G 18/246; C08G 18/3206; C08G 18/6674; C08G 18/7671**

(86) International application number:
**PCT/CN2023/107453**

(87) International publication number:
**WO 2025/015450 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Chitec Technology Co., Ltd.**
**Taipei City 110 (TW)**

(72) Inventors:
- **LUO, De-Shun**
  **Taiwan (CN)**
- **CHENG, Ching-Hao**
  **Taiwan (CN)**
- **WU, Huang-Min**
  **Taiwan (CN)**
- **CHANG, Wei-Chun**
  **Taiwan (CN)**
- **HUANG, Yi-Shuo**
  **Taiwan (CN)**
- **WU, Chi-Feng**
  **Taiwan (CN)**
- **CHEN, Si-Yuan**
  **Taiwan (CN)**
- **CHIANG, Yen-Hei**
  **Taiwan (CN)**
- **SUNG, Wei-Cheng**
  **Taiwan (CN)**

(74) Representative: **Herrero & Asociados, S.L.**
**Edificio Aqua - Agustín de Foxá, 4-10**
**28036 Madrid (ES)**

# (54) THERMOPLASTIC POLYURETHANE PRECURSOR, AND THERMOPLASTIC POLYURETHANE AND PREPARATION METHOD THEREFOR AND USE THEREOF

(57) A thermoplastic polyurethane precursor is provided. The thermoplastic polyurethane precursor can be used to prepare a polyurethane having a low initial yellowness index, high yellowing resistance, high thermal oxidative aging resistance, high hydrolysis resistance, and low fisheye. The thermoplastic polyurethane precursor comprises a polyisocyanate, a chain extender, a polymer polyol, and a first auxiliary agent, wherein the first auxiliary agent comprises:
(d1) benzenepropanoic acid, 3,5-bis(1,1-dimethylethyl)-4-hydroxy-C7-C9 branched alkyl esters;
(d2) phosphorous acid, mixed 2,4-bis(1,1-dimethylpropyl)phenyl and 4-(1,1-dimethylpropyl)phenyl triesters;
(d3) 4-tert-butyl-2-(5-tert-butyl-2-oxo-3H-benzofuran-3-yl)phenyl-3,5-di-tert-butyl-4 -hydroxybenzoate; and
(d4) at least one of a compound of formula (I) and a compound of formula (II),

EP 4 520 773 A1

[Formula (I)]

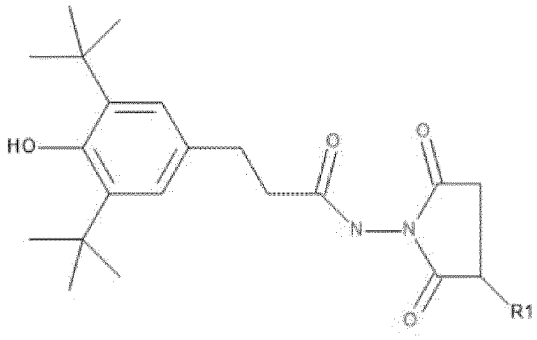

,

wherein R1 is a C12 alkenyl;

[Formula (II)]

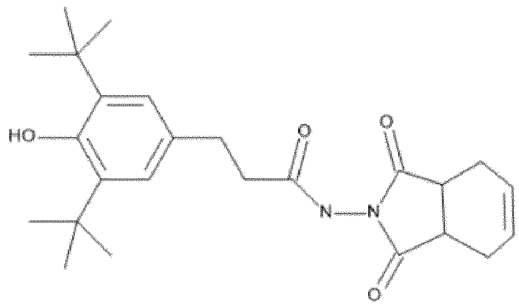

.

## Description

### Technical Field

The present invention provides a thermoplastic polyurethane precursor, especially a thermoplastic polyurethane precursor comprising a specific auxiliary agent. The present invention also provides a thermoplastic polyurethane obtained from the thermoplastic polyurethane precursor, a method of manufacturing the same and uses of the same.

### Background Technologies

Thermoplastic polyurethanes belong to the category of thermoplastic elastomers, characterized as linear segmental copolymers consisting of rigid chain segment(s) and flexible chain segment(s). Thermoplastic polyurethanes are derived through the reaction of a polyisocyanate with a polymer polyol and a chain extender. The rigid chain segment(s) are formed by the reaction of the polyisocyanate with the chain extender, while flexible chain segment(s) are formed by the reaction of the polyisocyanate with the polymer polyol. Typically, by adjusting the proportions of the raw materials, it is possible to provide a thermoplastic polyurethane with desired mechanical properties, such as wear resistance, temperature tolerance, flexibility, and extensibility. Thermoplastic polyurethanes generally can endure a low temperature of about -40°C and a high temperature of about 120°C. Moreover, thermoplastic polyurethanes typically exhibit outstanding load-bearing capacity, impact resistance, elasticity, toughness, and aging resistance. They have resistance to oil and aliphatic hydrocarbon solvents, and have resistance against oxygen and ozone. Consequently, thermoplastic polyurethanes have extensive applications in various technical fields, including but not limited to coating materials, elastomers, foam materials, adhesives, and sealing agents.

Method for preparing thermoplastic polyurethanes include but are not limited to a commonly known method called the "one-shot method." In this process, all raw materials (such as a polymer polyol, a polyisocyanate, and a chain extender) are proportionally fed into a twin screw extruder to obtain a high-viscosity thermoplastic polyurethane gel. The gel is subjected to an aging process under 70°C to 100°C and then processed into film products. However, the yellowing problem of thermoplastic polyurethanes and particularly fisheye problems of their film products have not been solved by the prior art.

Fisheye problems are common technical issues encountered in the film processing of thermoplastic polyurethanes. Particularly, in transparent films, the presence of fisheye significantly compromise the film's appearance. Therefore, waste and degraded products resulting from fisheye defects constitute a substantial portion of losses in the thermoplastic polyurethane film industry, which has not been solved by the prior art.

Generally, the causes of fisheye in thermoplastic polyurethane films are "mechanical impurities" or "overly polymerized substances". "Mechanical impurities" refer to impurities from external sources that are incorporated into the thermoplastic polyurethane during the preparation or processing process. This issue can be mitigated by process management and cleaning procedures. "Overly polymerized substances" refer to dimers or polymers of polyisocyanate, or high-melting-point molecules such as urea, biuret, and similar compounds resulting from side reactions. During film processing, the polymer located in the fisheye area cannot evenly disperse and mix with the surrounding polymer due to premature caking and hardening, resulting in granular or arrow-shaped stains on the film surface.

Furthermore, the high reaction temperature and high mixing shear force during the process of preparing thermoplastic polyurethane using a twin screw extruder would cause the thermoplastic polyurethane (especially aromatic thermoplastic polyurethane) to be yellowish. The use of a hindered phenol antioxidant can at most avoid the degradation of molecules, but cannot effectively inhibit yellowing. On the other hand, the use of a phosphite ester-based antioxidant can effectively inhibit yellowing during reaction, but would cause hydrolysis problems in the thermoplastic polyurethane. Although hydrolysis can be inhibited by adding a great amount of a carbodiimide-based anti-hydrolysis agent, the addition of the anti-hydrolysis agent would not only raise the cost but also cause problems such as exudation of additives.

Therefore, a thermoplastic polyurethane with a low initial yellowness index, high yellowing resistance, high thermal oxidative aging resistance, high hydrolysis resistance, and low fisheye is needed.

### Content of Invention

The inventor of the present invention found that by combining a compound having a structure of 3,5-di-tert-4-hydroxybenzoate, a specific hindered phenol antioxidant, a specific liquid phosphite ester-based antioxidant, and a specific lactone-based antioxidant in the formulation for preparing a thermoplastic polyurethane, an unexpected synergistic effect can be achieved. This results in the obtained thermoplastic polyurethane possessing a low initial yellowness index, high yellowing resistance, high thermal oxidative aging resistance, high hydrolysis resistance, and low fisheye.

Therefore, an objective of the present invention is to provide a thermoplastic polyurethane precursor, which comprises:

(A) a polyisocyanate;

(B) a chain extender;

(C) a polymer polyol; and

(D) a first auxiliary agent, which comprises:

(d1) benzenepropanoic acid, 3,5-bis(1,1-dimethylethyl)-4-hydroxy-C7-C9 branched alkyl esters;

(d2) phosphorous acid, mixed 2,4-bis(1,1-dimethylpropyl)phenyl and 4-(1,1-dimethylpropyl)phenyl triesters;

(d3) 4-tert-butyl-2-(5-tert-butyl-2-oxo-3H-benzofuran-3-yl)phenyl-3,5-di-tert-butyl-4-hydroxybenz oate; and

(d4) at least one of a compound of formula (I) and a compound of formula (II),

[Formula (I)]

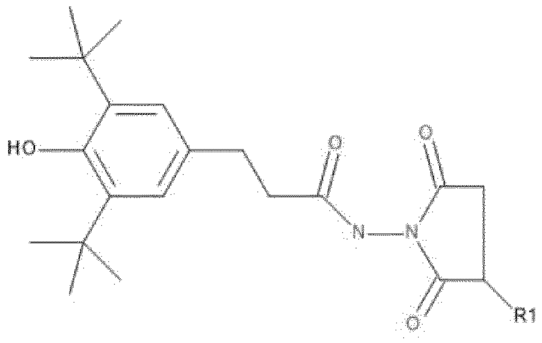

,

wherein R1 is a C12 alkenyl;

[Formula (II)]

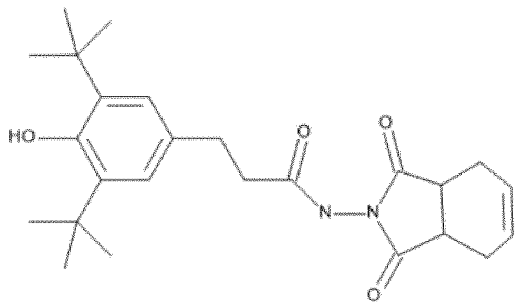

.

In some embodiments of the present invention, the polyisocyanate (A) comprises an aromatic polyisocyanate.

In some embodiments of the present invention, the polymer polyol (C) is selected from the group consisting of a polyether polyol, a polyester polyol, a polysiloxane polyol, and combinations thereof.

In some embodiments of the present invention, the chain extender (B) is selected from the group consisting of a polyol, a diamine, an amino alcohol, and combinations thereof.

In some embodiments of the present invention, the amounts of components (d1) to (d2) are each independently 0.01 wt% to 1.0 wt% based on the total weight of the thermoplastic polyurethane precursor.

In some embodiments of the present invention, the thermoplastic polyurethane precursor further comprises an additive selected from the group consisting of a defoaming agent, a leveling wetting agent, a thickener, a dispersing agent, wax, a matting powder, an antibacterial agent, a metal oxide-based light screening agent, a light stabilizer, a thermal

stabilizer, a UV absorber, a blue-light absorber, an antioxidant, a peroxide scavenger, a free radical scavenger, a filler, rubber (including siloxane rubber), a food preservative, a flame retardant, a plasticizer, a dye, a pigment (including titanium white and carbon black), a brightener, an antistatic agent (including graphene and carbon nanotube), a fluorescent whitening agent, an antideteriorant, a metal stabilizer, an acid absorbent, an anti-hydrolysis agent, and combinations thereof.

Another objective of the present invention is to provide a thermoplastic polyurethane, which comprises a first auxiliary agent, wherein the first auxiliary agent comprises:

(d1) benzenepropanoic acid, 3,5-bis(1,1-dimethylethyl)-4-hydroxy-C7-C9 branched alkyl esters;

(d2) phosphorous acid, mixed 2,4-bis(1,1-dimethylpropyl)phenyl and 4-(1,1-dimethylpropyl)phenyl triesters;

(d3) 4-tert-butyl-2-(5-tert-butyl-2-oxo-3H-benzofuran-3-yl)phenyl-3,5-di-tert-butyl-4-hydroxy benzoate; and

(d4) at least one of a compound of formula (I) and a compound of formula (II),

[Formula (I)]

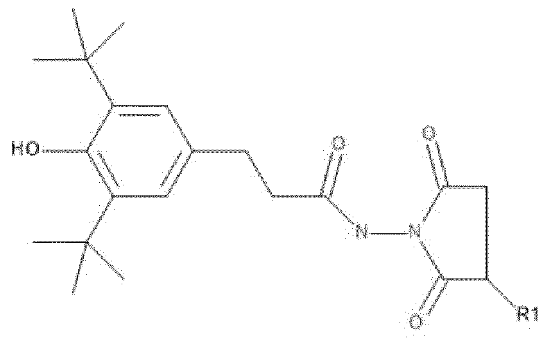

,

wherein R1 is a C12 alkenyl;

[Formula (II)]

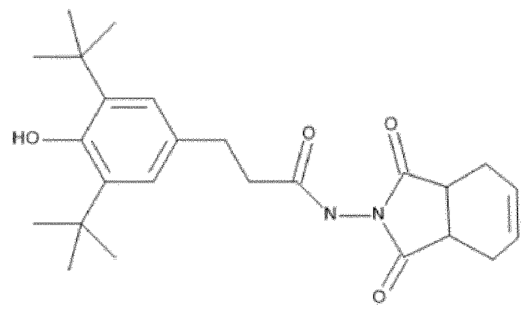

.

In some embodiments of the present invention, the thermoplastic polyurethane further comprises an additive selected from the group consisting of a defoaming agent, a leveling wetting agent, a thickener, a dispersing agent, wax, a matting powder, an antibacterial agent, a metal oxide-based light screening agent, a light stabilizer, a thermal stabilizer, a UV absorber, a blue-light absorber, an antioxidant, a peroxide scavenger, a free radical scavenger, a filler, rubber (including siloxane rubber), a food preservative, a flame retardant, a plasticizer, a dye, a pigment (including titanium white and carbon black), a brightener, an antistatic agent (including graphene and carbon nanotube), a fluorescent whitening agent, an antideteriorant, a metal stabilizer, an acid absorbent, an anti-hydrolysis agent, and combinations thereof.

Yet another objective of the present invention is to provide a method for preparing a thermoplastic polyurethane, which comprises the following steps:

providing the aforementioned thermoplastic polyurethane precursor; and

subjecting the thermoplastic polyurethane precursor to polymerization to obtain a thermoplastic polyurethane.

In some embodiments of the present invention, the method for preparing the thermoplastic polyurethane further comprises subjecting the thermoplastic polyurethane to pelletizing, extrusion, laminating, injection molding, calendaring, casting, blowing, coating, melt blowing, or fagoting.

A further objective of the present invention is to provide use of the aforementioned thermoplastic polyurethane for preparation of a thermoplastic polyurethane article having low fisheye, a low initial yellowness index, high yellowing resistance, high thermal oxidative aging resistance, and high hydrolysis resistance.
lowing resistance, high thermal oxidative aging resistance, and high hydrolysis resistance.

In some embodiments of the present invention, the thermoplastic polyurethane article is selected from the group consisting of a transparent housing, a packaging article, a household article, a textile article, a medical article, a sporting article, an electronic product, an optical product, an architectural article, a mechanical part, an automobile article, a military industrial article, and a coating.

To render the above objectives, technical features, and advantages of the present invention more apparent, the present invention will be described in detail with reference to some embodiments hereinafter.

**Specific Embodiments**

Hereinafter, some embodiments of the present invention will be described in detail. However, the present invention may be embodied in various embodiments, and the protection scope of the present invention should not be limited to those described in the specification.

Unless it is additionally explained, the expressions "a," "the," or the like recited in the specification and in the claims should include both the singular and the plural forms.

Unless it is additionally explained, the expressions "first," "second," or the like recited in the specification and the claims are only used to distinguish the illustrated elements or components without special meanings. Those expressions are not used to represent any priority.

Unless otherwise specified, when detailing the amount of components in a solution, mixture, precursor, or thermoplastic polyurethane in the specification and the claims, the weight of the solvent is excluded.

Thermoplastic polyurethanes are a type of polymer containing a characteristic urethane unit in the main chain. Typically, a urethane group is formed by reacting an isocyanate functional group (-N=C=O) with a hydroxyl group (-OH). Therefore, precursors used in preparing thermoplastic polyurethanes generally comprise a polyisocyanate and a polyol. In addition, a chain extender may be added to further extend the molecular chain of the polyurethane to increase the molecular weight of the polyurethane.

The main advantage of the present application over prior art lies in providing a thermoplastic polyurethane characterized by a low initial yellowness index, high yellowing resistance, high thermal oxidative aging resistance, high hydrolysis resistance, and low fisheye. This is achieved through the combined use of a compound with a structure of 3,5-di-tert-4-hydroxybenzoate, a specific hindered phenol antioxidant, a specific liquid phosphite ester-based antioxidant, and a specific lactone-based antioxidant in the formulation of the thermoplastic polyurethane precursor. Details regarding the thermoplastic polyurethane precursor and its uses are provided below.

**1. Thermoplastic polyurethane precursor**

The thermoplastic polyurethane precursor of the present invention comprises (A) a polyisocyanate, (B) a chain extender, (C) a polymer polyol, and (D) a first auxiliary agent.

**1.1. Polyisocyanate (A)**

The polyisocyanate (A) can be either aliphatic or aromatic, and is preferably an aromatic polyisocyanate.

Examples of the polyisocyanate (A) include but are not limited to methylene diphenyl diisocyanate (MDI), m-xylylene diisocyanate (XDI), toluene-2,4-diisocyanate (TDI), trimethylene diisocyanate, tetramethylene diisocyanate, pentamethylene diisocyanate, hexamethylene diisocyanate, heptamethylene diisocyanate, octamethylene diisocyanate, tolylene-2,6-diisocyanate, 3,3'-dimethoxy-4,4'-biphenylene diisocyanate, 3,3'-dichloro-4,4'-biphenylene diisocyanate, 1,4-phenylene diisocyanate, isophorone diisocyanate (IPDI), 1,4-cyclohexylene diisocyanate (CHDI), decane-1,10-diyl diisocyanate, lysine diisocyanate (LDI), 1,4-butane diisocyanate (BDI), 3,3'-dimethyl-4,4'-biphenylene diisocyanate (TODI), naphthalene-1,5-diisocyanate (NDI), 4,4'-diisocyanato dicyclohexylmethane (H12MDI), 2-methylpentamethylene-1,5,-diisocyanate, 2-ethylbutane-1,4-diisocyanate, 1-isocyanato-3,3,5-trimethyl-5-isocyanatomethyl cyclohexane, 1,4-bis(isocyanatomethyl)cyclohexane, 1,4-cyclohexane diisocyanate, 1-methyl-2,4-cyclohexane diisocyanate, 1-methyl-2,6-cyclohexane diisocyanate, 2,2'-dicyclohexylmethane diisocyanate, 2,4-dicyclohexylmethane diisocyanate,

4,4'-dicyclohexylmethane diisocyanate, 2,4-toluene diisocyanate, 2,6-toluene diisocyanate, 3,3'-dimethylbiphenyl diisocyanate, and 1,2-diphenylethane diisocyanate. The aforementioned polyisocyanates can be used alone or in combination. In the appended Examples, methylene diphenyl diisocyanate (MDI) is used as the polyisocyanate (A).

Based on the total weight of the thermoplastic polyurethane precursor, the amount of the polyisocyanate (A) can be 0.01 wt% ro 50 wt%. For example, based on the total weight of the thermoplastic polyurethane precursor, the amount of the polyisocyanate (A) can be 0.01 wt%, 0.05 wt%, 0.1 wt%, 0.5 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, or 50 wt%, or within a range between any two of the values described herein.
wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, or 50 wt%, or within a range between any two of the values described herein.

### 1.2. Chain extender (B)

The chain extender (B) can be selected from the group consisting of a polyol, a diamine, an amino alcohol, and combinations thereof. Examples of the polyol include but are not limited to a diol and a triol. Examples of the diol include but are not limited to ethylene glycol, 1,2-propylene glycol, 1,3-propylene glycol, 1,4-butylene glycol, 2,3-butylene glycol, 1,5-pentylene glycol, 1,6-hexylene glycol, 1,7-heptylene glycol, 1,8-octylene glycol, 1,9-nonylene glycol, 1,10-decylene glycol, 1,4-cyclohexanedimethanol, 2-butyl-2-ethylpropanediol, neopentyl glycol, 2,2,4-trimethyl-1,3-pentanediol, 2-ethyl-1,3-hexanediol, and 1,4-cyclohexanediol. Examples of the triol include but are not limited to trimethylolpropane, glycerol, and 1,2,6-hexanetriol. Examples of the diamine include but are not limited to ethylenediamine, propylenediamine, 1,4-butanediamine, 1,6-hexanediamine, N,N'-diisobutyl-1,6-hexanediamine, 1,11-diaminoundecane, 1,12-diaminododecane, 1,3-cyclobutanediamine, 1,3-cyclohexanediamine, 1,4-cyclohexanediamine, p-xylylenediamine, bis(3-aminopropyl)methylamine, 3,3'-dichloro-4,4'-diamino-diphenylmethane, diaminotoluene, 4,4'-diaminodiphenylmethane, and 4,4'-diaminodiphenyl disulphide. Examples of the amino alcohol include but are not limited to ethanolamine, propanolamine, and N-phenyldiethanolamine. The aforementioned chain extenders can be used alone or in combination. In the appended Examples, 1,4-butylene glycol is used as the chain extender (B).

Based on the total weight of the thermoplastic polyurethane precursor, the amount of the chain extender (B) can be 0.01 wt% to 30 wt%. For example, based on the total weight of the thermoplastic polyurethane precursor, the amount of the chain extender (B) can be 0.01 wt%, 0.05 wt%, 0.1 wt%, 0.5 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, or 30 wt%, or within a range between any two of the values described herein.
wt%, 29 wt%, or 30 wt%, or within a range between any two of the values described herein.

### 1.3. Polymer polyol (C)

A polymer polyol is used in the thermoplastic polyurethane precursor of the present invention. The polymer polyol (C) can be selected from the group consisting of a polyether polyol, a polyester polyol, a polysiloxane polyol, and combinations thereof. Examples of the polyether polyol include but are not limited to poly(alkylene ether)diol, poly(tetramethylene ether glycol), polytetrahydrofuran diol, polyoxetane diol, and polyepoxypropane diol. Examples of the polyester polyol include but are not limited to lactone polyester diol, polyester amide diol, polyalkyldiene diol (such as polybutadiene diol), polybutylene adipate, and polycarbonate diol. The aforementioned polymer polyols can be used alone or in mixture. In the appended Examples, polytetrahydrofuran diol is used as the polymer polyol (C).

The molecular weight of the polymer diol (C) can be 250 to 7000. For example, the molecular weight of the polymer diol (C) can be 250, 300, 350, 400, 450, 500, 550, 600, 650 ,700, 750, 800, 850 ,900, 950, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4100, 4200, 4300, 4400, 4500, 4600, 4700, 4800, 4900, 5000, 5100, 5200, 5300, 5400, 5500, 5600, 5700, 5800, 5900, 6000, 6100, 6200, 6300, 6400, 6500, 6600, 6700, 6800, 6900, or 7000, or within a range between any two of the values described herein.

6100, 6200, 6300, 6400, 6500, 6600, 6700, 6800, 6900, or 7000, or within a range between any two of the values described herein.

Based on the total weight of the thermoplastic polyurethane precursor, the amount of the polymer diol (C) can be 0.01 wt% to 50 wt%. For example, based on the total weight of the thermoplastic polyurethane precursor, the amount of the polymer diol (C) can be 0.01 wt%, 0.05 wt%, 0.1 wt%, 0.5 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%,

24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, or 50 wt%, or within a range between any two of the values described herein.

29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt%, or 50 wt%, or within a range between any two of the values described herein.

### 1.4. First auxiliary agent (D)

The thermoplastic polyurethane precursor of the present invention comprises a first auxiliary agent (D) to address issues related to fisheye, initial yellowness index, yellowing resistance, thermal oxidative aging resistance, and hydrolysis resistance in the obtained thermoplastic polyurethane. Specifically, the first auxiliary agent (D) comprises the following four components: (d1) a hindered phenol antioxidant, (d2) a liquid phosphite ester-based antioxidant, (d3) a lactone-based antioxidant, and (d4) at least one of a compound of formula (I) and a compound of formula (II), wherein R1 in formula (I) is a C12 alkenyl.

least one of a compound of formula (I) and a compound of formula (II), wherein R1 in formula (I) is a C12 alkenyl.

[Formula (I)]

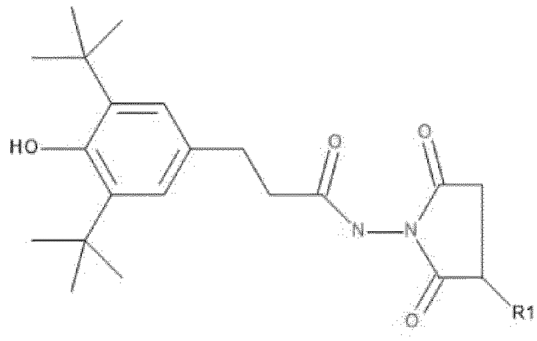

[Formula (II)]

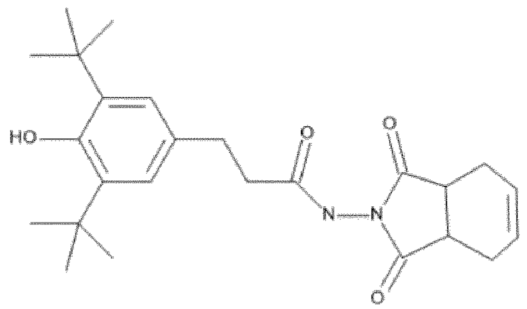

#### 1.4.1. Component (d1)

The component (d1) is a hindered phenol antioxidant. Examples of the hindered phenol antioxidant include: benzenepropanoic acid, 3,5-bis(1,1-dimethylethyl)-4-hydroxy-C7-C9 branched alkyl esters; triethylene glycol bis[3-(1,1-dimethylethyl)-4-hydroxy-5-methylphenyl propionate]; hydrocinnamic acid, 3,5-di-tert-butyl-4-hydroxy-, neopentanetetrayl ester; octadecyl 3-(3,5-di-tert-butyl-4-hydroxyphenyl)propionate; and 2,6-di-tert-butyl-p-methylphenol.

In the preferred embodiments of the present invention, the component (d1) is benzenepropanoic acid, 3,5-bis(1,1-dimethylethyl)-4-hydroxy-C7-C9 branched alkyl esters. Examples of benzenepropanoic acid, 3,5-bis(1,1-dimethylethyl)-4-hydroxy-C7-C9 branched alkyl esters include: benzenepropanoic acid, 3,5-bis(1,1-dimethylethyl)-4-hydroxy-isoheptyl ester; benzenepropanoic acid, 3,5-bis(1,1-dimethylethyl)-4-hydroxy-isooctyl ester; benzenepropanoic acid, 3,5-bis(1,1-dimethylethyl)-4-hydroxy-isononyl ester. For example, benzenepropanoic acid, 3,5-bis(1,1-dimethylethyl)-4-hydroxy-C7-C9 branched alkyl esters can be produced as Deox® BS-1135 (CAS number: 125643-61-0) available from Chitec Technology Company.

Based on the total weight of the thermoplastic polyurethane precursor, the amount of the component (d1) can be 0.01 wt% to 1.0 wt%. For example, based on the total weight of the thermoplastic polyurethane precursor, the amount of the component (d1) can be 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.15 wt%, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.8 wt%, 0.85 wt%, 0.9 wt%, 0.95 wt%, or 1.0 wt%, or within a range between any two of the values described herein.
wt%, or 1.0 wt%, or within a range between any two of the values described herein.

### 1.4.2. Component (d2)

The component (d2) is a liquid phosphite ester-based antioxidant. Examples or the liquid phosphite ester-based antioxidant include: phosphorous acid, mixed 2,4-bis(1,1-dimethylpropyl)phenyl and 4-(1,1-dimethylpropyl)phenyl triesters; tris(dipropylene glycol) phosphite; and poly(dipropylene glycol)phenyl phosphite. In the preferred embodiments of the present invention, the component (d2) is phosphorous acid, mixed 2,4-bis(1,1-dimethylpropyl)phenyl and 4-(1,1-dimethylpropyl)phenyl triesters, which is a mixture of 2,4-bis(1,1-dimethylpropyl)phenyl-4-(1,1-dimethylpropyl)phenyl phosphite, 2,4-bis(1,1-dimethylpropyl)phenyl bis[4-(1,1-dimethylpropyl)phenyl] phosphite, and tris[4-(1,1-dimethylpropyl)phenyl] phosphite. An example of the mixture includes Weston® 705T (CAS number: 939402-02-5), available from SI group.

The component (d2) may further comprise an acid neutralizer to absorb acid or inhibit hydrolysis. An example of the acid neutralizer includes, but is not limited to, triisopropanolamine (TIPA).

Based on the total weight of the thermoplastic polyurethane precursor, the amount of the component (d2) can be 0.01 wt% to 1.0 wt%. For example, based on the total weight of the thermoplastic polyurethane precursor, the amount of the component (d2) can be 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.15 wt%, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.8 wt%, 0.85 wt%, 0.9 wt%, 0.95 wt%, or 1.0 wt%, or within a range between any two of the values described herein.
wt%, or 1.0 wt%, or within a range between any two of the values described herein.

### 1.4.3. Component (d3)

The component (d3) is a lactone-based antioxidant. Examples of the lactone-based antioxidant include 4-tert-butyl-2-(5-tert-butyl-2-oxo-3H-benzofuran-3-yl)phenyl-3,5-di-tert -butyl-4-hydroxybenzoate, 5,7-di-tert-butyl-3-(3,4-dimethylphenyl)benzofuran-2(3H)-one, and xylyl dibutylbenzofuranone.

In the preferred embodiments of the present invention, the component (d3) is 4-tert-butyl-2-(5-tert-butyl-2-oxo-3H-benzofuran-3-yl)phenyl-3,5-di-tert-butyl-4-hydroxybenz oate. An example of the compound includes Revonox® 501 (CAS number: 1261240-30-5), available from Chitec Technology Company.

Based on the total weight of the thermoplastic polyurethane precursor, the amount of the component (d3) can be 0.01 wt% to 1.0 wt%. For example, based on the total weight of the thermoplastic polyurethane precursor, the amount of the component (d3) can be 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.15 wt%, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.8 wt%, 0.85 wt%, 0.9 wt%, 0.95 wt%, or 1.0 wt%, or within a range between any two of the values described herein.
wt%, or 1.0 wt%, or within a range between any two of the values described herein.

### 1.4.4. Component (d4)

The component (d4) comprises a compound of formula (I) or a compound of formula (II), or the component (d4) comprises both a compound of formula (I) and a compound of formula (II). Alternatively, the component (d4) consists essentially of a compound of formula (I) or a compound of formula (II), or the component (d4) consists essentially of both a compound of formula (I) and a compound of formula (II). Alternatively, the component (d4) consists of a compound of formula (I) or a compound of formula (II), or the component (d4) consists of both a compound of formula (I) and a compound of formula (II). R1 in formula (I) is a C12 alkenyl, which can be a linear or branched alkenyl, preferably a linear alkenyl.

[Formula (I)]

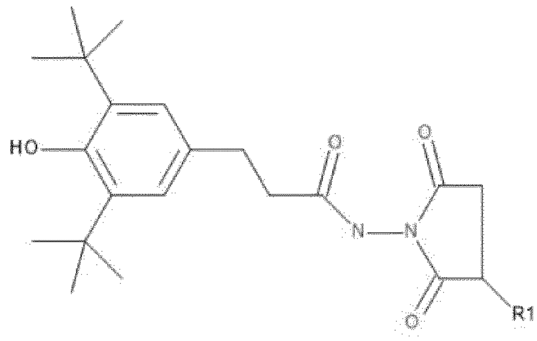

[Formula (II)]

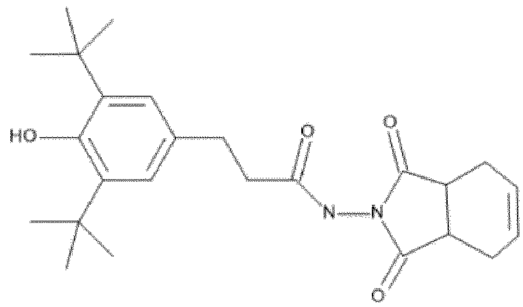

The IUPAC name of the compound of formula (I) is 3-(3,5-di-tert-butyl-4-hydroxyphenyl)-N-[3-[dodecenyl]-2,5-dioxopyrrolidin-1-yl] propionamide, wherein the dodecenyl corresponds to R1 of formula (I) and can be linear or branched, preferably linear. The IUPAC name of the compound of formula (II) is 3-(3,5-di-tert-butyl-4-hydroxyphenyl)-N-[3-[1,3-dioxo-3a,4,7,7a-tetrahydroisoindol-2-yl]] propionamide.

The compound of formula (I) and the compound of formula (II) can be commercially obtained or synthesized through chemical methods. The chemical synthesis method is not particularly limited, and persons having ordinary skill in the art would be able to achieve synthesis using existing chemical mechanisms based on the disclosure within the specification of the subject application. For example, the compound of formula (I) can be synthesized by reacting 3-(3,5-di-tert-butyl-4-hydroxyphenyl)propylhydrazine with dodecenyl succinic anhydride, while the compound of formula (II) can be obtained through a reaction of 3-(3,5-di-tert-butyl-4-hydroxyphenyl)propylhydrazine with tetrahydrophthalic anhydride.

Based on the total weight of the thermoplastic polyurethane precursor, the amount of the component (d4) can be 0.01 wt% to 1.0 wt%. For example, based on the total weight of the thermoplastic polyurethane precursor, the amount of the component (d4) can be 0.01 wt%, 0.02 wt%, 0.03 wt%, 0.04 wt%, 0.05 wt%, 0.06 wt%, 0.07 wt%, 0.08 wt%, 0.09 wt%, 0.1 wt%, 0.15 wt%, 0.2 wt%, 0.25 wt%, 0.3 wt%, 0.35 wt%, 0.4 wt%, 0.45 wt%, 0.5 wt%, 0.55 wt%, 0.6 wt%, 0.65 wt%, 0.7 wt%, 0.75 wt%, 0.8 wt%, 0.85 wt%, 0.9 wt%, 0.95 wt%, or 1.0 wt%, or within a range between any two of the values described herein.

wt%, or 1.0 wt%, or within a range between any two of the values described herein.

### 1.5. Additives

The thermoplastic polyurethane precursor of the present invention may optionally comprise a conventional additive that can be used in thermoplastic polyurethane to adaptively improve the physicochemical properties of the thermoplastic polyurethane or impart a desired function to the thermoplastic polyurethane. Examples of the conventional additive include but are not limited to a defoaming agent, a leveling wetting agent, a thickener, a dispersing agent, wax, a matting powder, an antibacterial agent, a metal oxide-based light screening agent, a light stabilizer, a thermal stabilizer, a UV absorber, a blue-light absorber, an antioxidant, a peroxide scavenger, a free radical scavenger, a filler, rubber (including siloxane rubber), a food preservative, a flame retardant, a plasticizer, a dye, a pigment (including titanium white and carbon black), a brightener, an antistatic agent (including graphene and carbon nanotube), a fluorescent whitening agent, an antideteriorant, a metal stabilizer, an acid absorbent, and an anti-hydrolysis agent. The aforementioned additives can be used alone or in combination.

The amount of the additive is not particularly limited as long as the desired function can be achieved. Generally,

based on the total weight of the thermoplastic polyurethane precursor, the amount of the additive can be 0.01 wt% to 30 wt%. For example, based on the total weight of the thermoplastic polyurethane precursor, the amount of the additive can be 0.01 wt%, 0.1 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, 25 wt%, 26 wt%, 27 wt%, 28 wt%, 29 wt%, or 30 wt%, or within a range between any two of the values described herein.

### 2. Thermoplastic polyurethane

The thermoplastic polyurethane precursor can be used to prepare a thermoplastic polyurethane. Therefore, the present invention also provides a thermoplastic polyurethane, which comprises a first auxiliary agent. Detailed information regarding the first auxiliary agent, including its description and amount, is provided in section "1.4. First auxiliary agent" and will not be reiterated here.

The thermoplastic polyurethane of the present invention may optionally comprise a conventional additive to adaptively improve the physicochemical properties of the thermoplastic polyurethane or impart a desired function to the thermoplastic polyurethane. The description of the conventional additive applicable to the polyurethane is provided in section "1.5. Additive" and will not be reiterated here.

### 3. Preparation of thermoplastic polyurethane

The present invention also provides a method for preparing a thermoplastic polyurethane, which comprises subjecting the thermoplastic polyurethane precursor to polymerization to obtain a thermoplastic polyurethane.

In some embodiments of the present invention, the polymerization is conducted in the presence of a catalyst. Examples of the catalyst include but are not limited to a tertiary amine catalyst, an organometallic catalyst, and a base. Examples of the tertiary amine catalyst include but are not limited to triethylamine, dimethylcyclohexylamine, triethylenediamine, N,N,N',N'-tetramethylethylenediamine, N-methylmorpholine, N,N-dimethylpiperazine, 2-(dimethylaminoethoxy)ethanol, diazabicyclo(2.2.2)octane, N,N-dimethylbenzylamine, and 2-methylimidazole. Examples of the organometallic catalyst include but are not limited to tin diacetate, tin dioctoate, stannous octoate, stannous oleate, tin dilaurate, dibutyltin dilaurate, dibutyltin octoate, diocyltin diacetate, iron acetylacetonate, titanate, and tetrabutoxytitanium. Examples of the base include but are not limited to tetraalkylammonium hydroxide, sodium hydroxide, and sodium phenoxide salt. The aforementioned catalysts can be used alone or in combination. In the appended Examples, dibutyltin dilaurate is used as a catalyst.

The amount of the catalyst is not particularly limited as long as it can facilitate the polymerization. Generally, based on the total weight of the thermoplastic polyurethane precursor, the amount of the catalyst can be 0.01 wt% to 2.0 wt%. For example, based on the total weight of the thermoplastic polyurethane precursor, the amount of the catalyst can be 0.01 wt%, 0.1 wt%, 0.5 wt%, 1 wt%, 1.5 wt%, or 2.0 wt%, or within a range between any two of the values described herein.

### 4. Uses of thermoplastic polyurethane

The thermoplastic polyurethane of the present invention has at least the following advantages: a low initial yellowness index, high yellowing resistance, high thermal oxidative aging resistance, high hydrolysis resistance, and particularly low fisheye. Therefore, the present invention also provides use of the thermoplastic polyurethane for preparation of a thermoplastic polyurethane article having low fisheye, a low initial yellowness index, high yellowing resistance, high thermal oxidative aging resistance, and high hydrolysis resistance. The thermoplastic polyurethane article can be obtained by subjecting the thermoplastic polyurethane to conventional processing. Examples of the conventional processing include but are not limited to pelletizing, extrusion, laminating, injection molding, calendaring, casting, blowing, coating, melt blowing, fagoting, and the like.

The type of the thermoplastic polyurethane article is not particularly limited and can encompass any article suitable for the application of conventional thermoplastic polyurethane. Examples of such articles include, but are not limited to, a transparent housing, a packaging article, a household article, a textile article, a medical article, a sporting article, an electronic product, an optical product, an architectural article, a mechanical part, an automobile article, a military industrial article, and a coating. An example of the "packaging article" is a wrapping film. Examples of the "household article" include a food container, a luminaire part, a sheet, and the like. Examples of the "textile article" include clothing, bedding, shoes, and the like. Examples of the "medical article" include members of medical devices. Examples of the "electronic product" include members of display devices. Examples of the "optical product" include members of solar panels. Examples of the "architectural article" include road construction members, wind power generation members, flameproof material, waterproof material, and the like. Examples of the "mechanical part" include members of agricultural machinery, members of transportation crafts, and the like. An example of the "automobile article" is an air bag. An example of the "military industrial article" is an explosion proof panel.

Specifically, examples of the thermoplastic polyurethane article include, but are not limited to, the following embodiments: a packaging material for food or drugs sensitive to oxygen, an air bag, an air balloon, an air cushion, a lamp cup, a cooking tool, a storage tool, furniture, a curtain, an office carpet, a toy, sporting article parts, a ball, shoe parts, a sneaker air cushion, hiking shoes, snowshoes, golf shoes, skating shoes, an airbed, a water bag, a wetsuit, a snowsuit, a swimming suit, an elastic band, a disposable diaper, a badge, a golf-related article, eyeglass accessories, a photochromic lens, a contact lens, a bed sheet, a tablecloth, a shower curtain, a piano, a cell phone keypad, a plastic air-filled toy, a computer keyboard, an umbrella, a suitcase, a purse, a plate, a fiber, a fabric, clothing, pants, shapewear, a coat, period pants, an apron, an upholstery cloth, gloves, a medical device, a dental article, a sterilization container, a filter, a hygiene product, a diaper, a film, a medical tube, a medical valve, a hose, a hose lining, a pipe material, a pipe lining, protective clothing, a wound dressing, surgical scrubs, a surgical cap, surgical gloves, hospital bedding, an ice pack, a bandage, a plasma bag, a surgical bandaging strip, a face mask, an air sac for hospital beds, an infusion bag, a urinary catheter, a culture flask, a medium flask, an instrument sampling window, a liquid-storing container (such as a condom, a storage bag or bottle, an infusion bag or bottle), aluminum-plastic packaging, bubble wrap, a biomedical implantable device, a pacemaker lead, an artificial heart, a cardiac valve, a scaffolding cover, an artificial tendon, an artificial artery, an artificial vein, an implant containing a pharmaceutical active agent, a drug delivery device, a vaginal ring, a surgical correction article, an implant, a bone implant, a housing for mobile devices, a filter, an optical lens, an optical element, an optical article, a film for transparent screens, an electrical conductive film, a thermal transfer film, a packaging film, a low electrical resistance film, a peripheral material for solar panels, a lamp cup, a roof membrane, a roof cushion, eaves, a wall material, a floor material, a conduit material, a signboard, a sun visor, a greenhouse covering film, a backlight, a windmill part, a wire covering material, an acoustic insulation material, a silencer device, a mechanical part, an adhesive, a coating, a foam laminate, an encapsulated molding article, a speaker drum paper, fireproof clothing, a fire-fighting suit, a fireproof cloth, a sunshade awning, a waterproof strip, a waterproof cloth, a handlebar, a hand crank, a carpet, a window, a window frame material, a door, a wallpaper, a decorative board, a silk screen, a metal board, a film, a bearing, a joint, a valve part, a conveyor belt, a timing belt, a gear, a rubber material, a roller, a wrap film for transportation crafts, a housing of a transportation craft, a luminaire for transportation crafts, a trim part, a heat insulation layer for transparent panels, a sofa seat, an insulated panel, a tire, a steering wheel, a crate, a truckle, a pulley, an air bag cover, a buffer, a heat dissipater, a mudguard, a dashboard, a car door component, an engine hood component, a choke plate, an air deflector, a case cover, an outer cover for reflecting mirrors, a car body panel, a lateral protective molding article, an explosion proof glass, a boat or ship component, an aircraft component, an aerocraft component, a transparent aircraft component, a radome, a bullet proof panel, explosion proof glass, a microwave absorbing layer, an airplane fuel tank, a coating for weapon storage, a military hydration pack, a life jacket, and an inflatable boat.

## 5. Examples

### 5.1. Testing methods

The present invention is further illustrated by the embodiments hereinafter, wherein the testing instruments and methods are as follows.

[Melt flow index (MFI) measurement]

5 g of a thermoplastic polyurethane are prepared as a sample. The initial MFI of the thermoplastic polyurethane is measured according to ASTM D-1238 using a melt flow indexer (model number: GT-7100-MI, available from GOTECH Company) under the following conditions: the temperature is 200°C, the pressure is 5 kg, and the weight passing through the standard die (2.095 mm in diameter) within 10 minutes is measured. The unit of MFI is expressed in grams per 10 minutes, i.e., "g/10 min."

[Thermal oxidative aging resistance test]

Based on the aforementioned method for melt flow index (MFI) measurement, the thermoplastic polyurethane plastic block undergoes an additional three rounds of MFI measurement. In other words, the thermoplastic polyurethane plastic block undergoes the melting process three times, yielding the first MFI, the second MFI, and the third MFI of the thermoplastic polyurethane.

[Yellowness index test]

The initial yellowness index (YI) of the thermoplastic polyurethane specimen is tested according to ASTM 1926-70 using a spectrophotometer (model number: ColorQuest XE, available from Hunter Lab Company).

[Color difference test]

The ΔE of the thermoplastic polyurethane specimen is tested by using a UV-Vis spectrophotometer (model number: Varian Cary® 50, available from Agilent Company).

[Thermal yellowing resistance test]

The thermoplastic polyurethane specimen is placed in an oven at 120°C for aging, and the YI value and the ΔE value of the thermoplastic polyurethane are measured respectively after 16 hours, 24 hours, and 96 hours. Lower values indicate better thermal yellowing resistance properties.

[Hydrolysis resistance test]

First, a sample is prepared, and the tensile strength of the thermoplastic polyurethane specimen as prepared (initial tensile strength) is measured according to ASTM D-412 using a tensile test machine (model number: AI-7000M, available from GOTECH). Subsequently, the thermoplastic polyurethane specimen is exposed to an environment of 95% humidity and a temperature of 80°C for 168 hours in an oven. After that, the tensile strength of the thermoplastic polyurethane specimen after the 168-hour oven exposure (heat resistance tensile strength) is measured. The unit of tensile strength is kgf/cm$^2$. The variation ratio of the tensile strength (unit: %) is calculated using the following equation to represent the hydrolysis resistance capability of the thermoplastic polyurethane. A smaller the variation ratio indicates better hydrolysis resistance capability.

$$\text{Variation ratio of tensile strength (\%)} = \frac{(\text{initial tensile strength} - \text{heat resistance tensile strength})}{\text{initial tensile strength}} \times 100\%$$

[Fisheye test]

A thermoplastic polyurethane film is prepared according to the following method. First, the thermoplastic polyurethane plastic block is hardened by cooling with liquid nitrogen, then comminuted into powder using a freezer mill (model number: UPZ100, available from Hosokawa Alpine Company). The milling conditions are set at -60°C and 22000 rpm. Subsequently, the thermoplastic polyurethane powder is fed into a micro twin screw extruder (model number: MC 15HT, available from Xplore Company) for melt extrusion. The rotational speed of the screw is 15 rpm and the temperature of the extruder is 175°C to 180°C. Finally, a thermoplastic polyurethane film with a thickness of 15 μm is produced using a cooling wheel. The film is then cut into a testing sample with a length of 5 cm and a width of 5 cm.

The testing sample of the thermoplastic polyurethane film is observed using a microscope (model number: PEAK 2008-50X STAND MICROSCOPE) at 50X magnification or higher to identify the presence of fisheye (granular or arrow-shape stains). A score ranging from 1 to 5 is assigned based on the amount of fisheye, wherein a score of 5 indicates the least amount of fisheye and represents the best quality, while a score of 1 indicates the highest amount of fisheye and represents the poorest quality.

### 5.2. Preparation of thermoplastic polyurethane

[Example 1]

100 g of polytetrahydrofuran diol (model number: PTMEG1000, available from Mitsubishi Chemical Company, with an OH value of 112.2), 11 g of 1,4-butylene glycol (available from Tokyo Chemical Industry Company), 0.1 wt% (based on the total weight of the thermoplastic polyurethane precursor) of a hindered phenol antioxidant (model number: Deox® BS-1135, available from Chitec Technology Company), 0.1 wt% (based on the total weight of the thermoplastic polyurethane precursor) of a liquid phosphite ester-based antioxidant (model number: Weston® 705T, available from SI group), 0.1 wt% (based on the total weight of the thermoplastic polyurethane precursor) of a lactone-based antioxidant (model number Revonox® 501, available from Chitec Technology Company), 0.1 wt% (based on the total weight of the thermoplastic polyurethane precursor) of 3-(3,5-di-tert-butyl-4-hydroxyphenyl)-N-[3-[dodecenyl]-2,5-dioxopyrrolidin-1-yl] propionamide, and 200 ppm of dibutyltin dilaurate were added into a reaction pot, then heated to 110°C. In addition, 56 g of MDI (available from BASF Company) was pre-heated to 110°C, then added to the reaction pot and stirred for 1 minute to initiate the reaction, resulting in a plastic block. Subsequently, the plastic block was placed in an oven and baked at 70°C for

24 hours to undergo aging, resulting in the thermoplastic polyurethane plastic block of Example 1.

[Example 2]

100 g of polytetrahydrofuran diol PTMEG1000, 11 g of 1,4-butylene glycol, 0.1 wt% (based on the total weight of the thermoplastic polyurethane precursor) of a hindered phenol antioxidant Deox® BS-1135, 0.1 wt% (based on the total weight of the thermoplastic polyurethane precursor) of a liquid phosphite ester-based antioxidant Weston® 705T, 0.1 wt% (based on the total weight of the thermoplastic polyurethane precursor) of a lactone-based antioxidant Revonox® 501, 0.1 wt% (based on the total weight of the thermoplastic polyurethane precursor) of 3-(3,5-di-tert-butyl-4-hydroxyphenyl)-N-[3-[1,3-dioxo-3a,4,7,7a-tetrahydroisoindol-2-yl]] propionamide, and 200 ppm of dibutyltin dilaurate were added into a reaction pot, then heated to 110°C. In addition, 56 g of MDI (available from BASF Company) was pre-heated to 110°C, then added to the reaction pot and stirred for 1 minute to initiate the reaction, resulting in a plastic block. Subsequently, the plastic block was placed in an oven and baked at 70°C for 24 hours to undergo aging, resulting in the thermoplastic polyurethane plastic block of Example 2.

[Comparative Example 1]

100 g of polytetrahydrofuran diol PTMEG1000, 11 g of 1,4-butylene glycol, 0.4 wt% (based on the total weight of the thermoplastic polyurethane precursor) of a hindered phenol antioxidant Deox® BS-1135, and 200 ppm of dibutyltin dilaurate were added into a reaction pot, then heated to 110°C. In addition, 56 g of MDI (available from BASF Company) was pre-heated to 110°C, then added to the reaction pot and stirred for 1 minute to initiate the reaction, resulting in a plastic block. Subsequently, the plastic block was placed in an oven and baked at 70°C for 24 hours to undergo aging, resulting in the thermoplastic polyurethane plastic block of Comparative Example 1.

[Comparative Example 2]

100 g of polytetrahydrofuran diol PTMEG1000, 11 g of 1,4-butylene glycol, 0.4 wt% (based on the total weight of the thermoplastic polyurethane precursor) of a liquid phosphite ester-based antioxidant Weston® 705T, and 200 ppm of dibutyltin dilaurate were added into a reaction pot, then heated to 110°C. In addition, 56 g of MDI (available from BASF Company) was pre-heated to 110°C, then added to the reaction pot and stirred for 1 minute to initiate the reaction, resulting in a plastic block. Subsequently, the plastic block was placed in an oven and baked at 70°C for 24 hours to undergo aging, resulting in the thermoplastic polyurethane plastic block of Comparative Example 2.

[Comparative Example 3]

100 g of polytetrahydrofuran diol PTMEG1000, 11 g of 1,4-butylene glycol, 0.4 wt% (based on the total weight of the thermoplastic polyurethane precursor) of a lactone-based antioxidant Revonox® 501, and 200 ppm of dibutyltin dilaurate were added into a reaction pot, then heated to 110°C. In addition, 56 g of MDI (available from BASF Company) was pre-heated to 110°C, then added to the reaction pot and stirred for 1 minute to initiate the reaction, resulting in a plastic block. Subsequently, the plastic block was placed in an oven and baked at 70°C for 24 hours to undergo aging, resulting in the thermoplastic polyurethane plastic block of Comparative Example 3.

[Comparative Example 4]

100 g of polytetrahydrofuran diol PTMEG1000, 11 g of 1,4-butylene glycol, 0.4 wt% (based on the total weight of the thermoplastic polyurethane precursor) of 3-(3,5-di-tert-butyl-4-hydroxyphenyl)-N-[3-[dodecenyl]-2,5-dioxopyrrolidin-1-yl] propionamide, and 200 ppm of dibutyltin dilaurate were added into a reaction pot, then heated to 110°C. In addition, 56 g of MDI (available from BASF Company) was pre-heated to 110°C, then added to the reaction pot and stirred for 1 minute to initiate the reaction, resulting in a plastic block. Subsequently, the plastic block was placed in an oven and baked at 70°C for 24 hours to undergo aging, resulting in the thermoplastic polyurethane plastic block of Comparative Example 4.

[Comparative Example 5]

100 g of polytetrahydrofuran diol PTMEG1000, 11 g of 1,4-butylene glycol, 0.2 wt% (based on the total weight of the thermoplastic polyurethane precursor) of a hindered phenol antioxidant Deox® BS-1135, 0.2 wt% (based on the total weight of the thermoplastic polyurethane precursor) of a liquid phosphite ester-based antioxidant Weston® 705T, and 200 ppm of dibutyltin dilaurate were added into a reaction pot, then heated to 110°C. In addition, 56 g of MDI (available from

BASF Company) was pre-heated to 110°C, then added to the reaction pot and stirred for 1 minute to initiate the reaction, resulting in a plastic block. Subsequently, the plastic block was placed in an oven and baked at 70°C for 24 hours to undergo aging, resulting in the thermoplastic polyurethane plastic block of Comparative Example 5.

[Comparative Example 6]

100 g of polytetrahydrofuran diol PTMEG1000, 11 g of 1,4-butylene glycol, 0.2 wt% (based on the total weight of the thermoplastic polyurethane precursor) of a hindered phenol antioxidant Deox® BS-1135, 0.1 wt% (based on the total weight of the thermoplastic polyurethane precursor) of a liquid phosphite ester-based antioxidant Weston® 705T, 0.1 wt% (based on the total weight of the thermoplastic polyurethane precursor) of a lactone-based antioxidant Revonox® 501, and 200 ppm of dibutyltin dilaurate were added into a reaction pot, then heated to 110°C. In addition, 56 g of MDI (available from BASF Company) was pre-heated to 110°C, then added to the reaction pot and stirred for 1 minute to initiate the reaction, resulting in a plastic block. Subsequently, the plastic block was placed in an oven and baked at 70°C for 24 hours to undergo aging, resulting in the thermoplastic polyurethane plastic block of Comparative Example 6.

### 5.3. Test of thermoplastic polyurethane

The thermoplastic polyurethane plastic blocks of Examples 1 and 2 and Comparative Examples 1 to 6 were individually used to prepare thermoplastic polyurethane specimens. First, 55 g of the thermoplastic polyurethane plastic block was placed in an oven of 100°C for 2 hours to eliminate surface moisture and ensure thorough drying. Then, the thermoplastic polyurethane plastic block was placed in a mold of 20 cm × 15 cm × 0.15 cm and subjected to hot pressing using a hot press machine (available from Long Chang Mechanical Industrial Company) under a pressure of 20 $kg/cm^2$ at 190°C for 1.5 minutes. The hot pressed thermoplastic polyurethane then underwent a cooling process in a cold press machine under a pressure of 50 $kg/cm^2$ for 5 to 10 minutes, resulting in a thermoplastic polyurethane specimen with a thickness of 0.15 cm.

The MFI, YI and ΔE of the thermoplastic polyurethane of Examples 1 and 2 and Comparative Examples 1 to 6 were measured. Additionally, tests for thermal oxidative aging resistance test, thermal yellowing resistance test, hydrolysis resistance test and fisheye test were conducted according to the aforementioned testing methods. The obtained results are tabulated in Tables 1 to 5.

Table 1: MFI and thermal oxidative aging resistance test of the thermoplastic polyurethane of Examples 1 and 2 and Comparative Examples 1 to 6

| | Initial MFI | First MFI | Second MFI | Third MFI |
|---|---|---|---|---|
| Unit | g/10 min | g/10 min | g/10 min | g/10 min |
| Example 1 | 1.8 | 2.8 | 5.6 | 8.5 |
| Example 2 | 2.1 | 3.1 | 9.1 | 13.4 |
| Comparative Example 1 | 3.0 | 3.4 | 11.8 | 18.6 |
| Comparative Example 2 | 5.1 | 5.2 | 8.6 | 13.2 |
| Comparative Example 3 | 5.4 | 6.4 | 20.6 | 31.17 |
| Comparative Example 4 | 4.5 | 6.8 | 30.0 | 38.6 |
| Comparative Example 5 | 4.4 | 5.4 | 20.0 | 29.2 |
| Comparative Example 6 | 3.3 | 3.4 | 12.0 | 19.2 |

Table 2: YI, ΔE and thermal yellowing resistance test of the thermoplastic polyurethane of Example 1 and Comparative Examples 1 to 6

| | Initial YI | ΔYI after 16 hours | ΔE after 16 hours |
|---|---|---|---|
| Example 1 | 2.1 | 4.6 | 2.9 |
| Comparative Example 1 | 2.9 | 10.1 | 6.5 |
| Comparative Example 2 | 1.2 | 4.1 | 2.6 |
| Comparative Example 3 | 2.6 | 10.5 | 6.7 |
| Comparative Example 4 | 1.7 | 7.5 | 4.4 |

(continued)

| | Initial YI | ΔYI after 16 hours | ΔE after 16 hours |
|---|---|---|---|
| Comparative Example 5 | 2.2 | 5.9 | 3.8 |
| Comparative Example 6 | 2.2 | 6.6 | 4.2 |

Table 3: hydrolysis resistance test of the thermoplastic polyurethane of Examples 1 and 2 and Comparative Examples 1 to 6

| | Initial tensile strength | Heat resistance tensile strength | Maintenance of tensile strength |
|---|---|---|---|
| Unit | $kgf/cm^2$ | $kgf/cm^2$ | |
| Example 1 | 596 | 479 | 80% |
| Example 2 | 588 | 410 | 70% |
| Comparative Example 1 | 576 | 449 | 78% |
| Comparative Example 2 | 582 | - | <5% |
| Comparative Example 3 | 597 | 380 | 64% |
| Comparative Example 4 | 525 | 402 | 77% |
| Comparative Example 5 | 610 | - | <5% |
| Comparative Example 6 | 579 | 376 | 63% |

Table 4: fisheye test of the thermoplastic polyurethane of Examples 1 and 2 and Comparative Examples 1 to 6

| | Example 1 | Example 2 | Comparative Example 1 | Comparative Example 2 | Comparative Example 3 | Comparative Example 4 | Comparative Example 5 | Comparative Example 6 |
|---|---|---|---|---|---|---|---|---|
| Fisheye test | 5.0 | 5.0 | 1.0 | 1.0 | 1.0 | 1.0 | 2.5 | 3.0 |

Table 5: long term thermal yellowing resistance test of the thermoplastic polyurethane of Examples 1 and 2 and Comparative Examples 1 to 6

| | Example 1 | Example 2 | Comparative Example 6 |
|---|---|---|---|
| Initial YI | 2.1 | 1.5 | 2.2 |
| ∆YI after 96 hours | 23.4 | 19.2 | 37.1 |
| ∆E after 96 hours | 15.1 | 12.4 | 23.5 |

As shown in Tables 1 to 5, the thermoplastic polyurethanes prepared from the thermoplastic polyurethane precursors of the present invention exhibit simultaneous advantages of a low initial yellowness index, high yellowing resistance, high thermal oxidative aging resistance, high hydrolysis resistance, and low fisheye. Particularly, the results of fisheye test are extremely good. By contrast, the thermoplastic polyurethanes not derived from the thermoplastic polyurethane precursors of the present invention fail to simultaneously exhibit a low initial yellowness index, high yellowing resistance, high thermal oxidative aging resistance, and high hydrolysis resistance, and the results of fisheye test are particularly poor. Specifically, as shown in Comparative Example 1, when the thermoplastic polyurethane precursor solely comprises the hindered phenol antioxidant as the first auxiliary agent, the obtained thermoplastic polyurethane has poor initial yellowness index, poor thermal yellowing resistance, and poor thermal oxidative aging resistance, along with poor fisheye test results. As shown in Comparative Example 2, when the thermoplastic polyurethane precursor solely comprises the liquid phosphite ester-based antioxidant as the first auxiliary agent, the obtained thermoplastic polyurethane has poor hydrolysis resistance, along with poor fisheye test results. As shown in Comparative Example 3, when the thermoplastic polyurethane precursor solely comprises the lactone-based antioxidant as the first auxiliary agent, the obtained thermoplastic polyurethane has poor thermal yellowing resistance, poor thermal oxidative aging resistance, and poor hydrolysis resistance, along with poor fisheye test results. As shown in Comparative Example 4, when the thermoplastic polyurethane precursor solely comprises the compound of formula (I) as the first auxiliary agent, the obtained thermoplastic polyurethane has poor thermal yellowing resistance and poor thermal oxidative aging resistance, along with poor fisheye test results. As shown in Comparative Example 5, when the thermoplastic polyurethane precursor solely comprises the hindered phenol antioxidant and the liquid phosphite ester-based antioxidant as the first auxiliary agent, the obtained thermoplastic polyurethane has poor thermal oxidative aging resistance and poor hydrolysis resistance, along with poor fisheye test results. As shown in Comparative Example 6, when the thermoplastic polyurethane precursor comprises the hindered phenol antioxidant, the liquid phosphite ester-based antioxidant and the lactone-based antioxidant as the first auxiliary agent but does not comprise the compound of formula (I) or (II), the obtained thermoplastic polyurethane has poor thermal oxidative aging resistance and poor hydrolysis resistance, along with poor fisheye test results.

To more clearly demonstrate the technical efficacy of the present invention, the Examples and Comparative Examples are compared and graded below in term of initial yellowness index, yellowing resistance, thermal oxidative aging resistance, hydrolysis resistance, and fisheye performance. Example 1 served as the standard for evaluation. The evaluation criteria are " ◎: excellent", "o: good", "△: ordinary", and "×: poor." As can be seen from the comparison results shown in Table 6, the thermoplastic polyurethanes of the present invention simultaneously have excellent performance in all of a low initial yellowness index, high yellowing resistance, high thermal oxidative aging resistance, high hydrolysis resistance, and low fisheye.

Table 6: Comprehensive comparison of Examples 1 and 2 and Comparative Examples 1 to 6

| | Initial yellowness index | Yellowing resistance | Thermal oxidative aging resistance | Hydrolysis resistance | Fisheye Performance |
|---|---|---|---|---|---|
| Example 1 | ○ | ◎ | ◎ | ◎ | ◎ |
| Example 2 | ◎ | ◎ | ○ | ○ | ◎ |
| Comparative Example 1 | × | × | △ | ○ | × |
| Comparative Example 2 | ◎ | ○ | ○ | × | × |
| Comparative Example 3 | △ | × | × | △ | × |
| Comparative Example 4 | ◎ | △ | × | ○ | × |
| Comparative Example 5 | ○ | △ | × | × | × |

(continued)

| | Initial yellowness index | Yellowing resistance | Thermal oxidative aging resistance | Hydrolysis resistance | Fisheye Performance |
|---|---|---|---|---|---|
| Comparative Example 6 | ○ | △ | △ | △ | △ |

The above examples illustrate the principle and efficacy of the present invention and show the inventive features thereof. People skilled in this field may proceed with a variety of modifications and replacements based on the disclosures and suggestions of the invention as described without departing from the principle thereof.

## Claims

1. A thermoplastic polyurethane precursor, which comprises:

(A) a polyisocyanate;
(B) a chain extender;
(C) a polymer polyol; and
(D) a first auxiliary agent, which comprises:

(d1) benzenepropanoic acid, 3,5-bis(1,1-dimethylethyl)-4-hydroxy-C7-C9 branched alkyl esters;
(d2) phosphorous acid, mixed 2,4-bis(1,1-dimethylpropyl)phenyl and 4-(1,1-dimethylpropyl)phenyl triesters;
(d3) 4-tert-butyl-2-(5-tert-butyl-2-oxo-3H-benzofuran-3-yl)phenyl-3,5-di-tert-butyl-4-hydro xybenzoate; and
(d4) at least one of a compound of formula (I) and a compound of formula (II),

[Formula (I)]

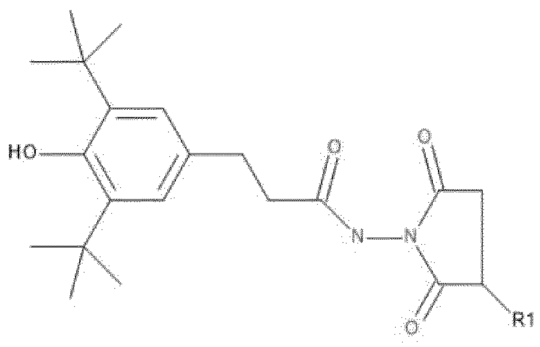

,

wherein R1 is a C12 alkenyl;

[Formula (II)]

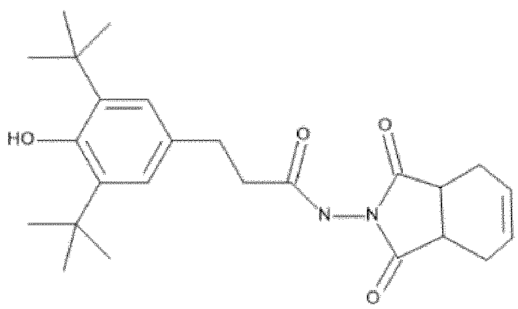

.

2. The thermoplastic polyurethane precursor of claim 1, wherein the polyisocyanate (A) comprises an aromatic polyisocyanate.

**3.** The thermoplastic polyurethane precursor of claim 1, wherein the polymer polyol (C) is selected from the group consisting of a polyether polyol, a polyester polyol, a polysiloxane polyol, and combinations thereof.

**4.** The thermoplastic polyurethane precursor of claim 1, wherein the chain extender (B) is selected from the group consisting of a polyol, a diamine, an amino alcohol, and combinations thereof.

**5.** The thermoplastic polyurethane precursor of any one of claims 1 to 4, wherein the amounts of components (d1) to (d2) are each independently 0.01 wt% to 1.0 wt% based on the total weight of the thermoplastic polyurethane precursor.

**6.** The thermoplastic polyurethane precursor of any one of claims 1 to 4, further comprising an additive selected from the group consisting of a defoaming agent, a leveling wetting agent, a thickener, a dispersing agent, wax, a matting powder, an antibacterial agent, a metal oxide-based light screening agent, a light stabilizer, a thermal stabilizer, a UV absorber, a blue-light absorber, an antioxidant, a peroxide scavenger, a free radical scavenger, a filler, rubber, a food preservative, a flame retardant, a plasticizer, a dye, a pigment, a brightener, an antistatic agent, a fluorescent whitening agent, an antideteriorant, a metal stabilizer, an acid absorbent, an anti-hydrolysis agent, and combinations thereof.

**7.** A thermoplastic polyurethane, which comprises a first auxiliary agent, wherein the first auxiliary agent comprises:

(d1) benzenepropanoic acid, 3,5-bis(1,1-dimethylethyl)-4-hydroxy-C7-C9 branched alkyl esters;
(d2) phosphorous acid, mixed 2,4-bis(1,1-dimethylpropyl)phenyl and 4-(1,1-dimethylpropyl)phenyl triesters;
(d3) 4-tert-butyl-2-(5-tert-butyl-2-oxo-3H-benzofuran-3-yl)phenyl-3,5-di-tert-butyl -4-hydroxybenzoate; and
(d4) at least one of a compound of formula (I) and a compound of formula (II),

[Formula (I)]

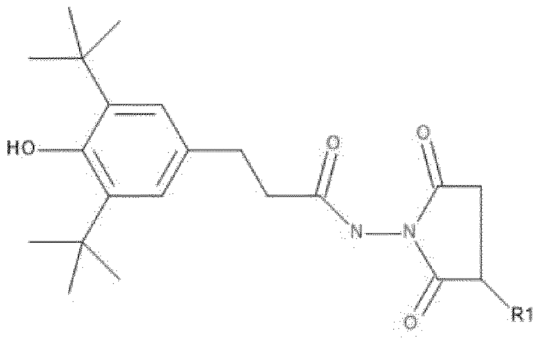

,

wherein R1 is a C12 alkenyl;

[Formula (II)]

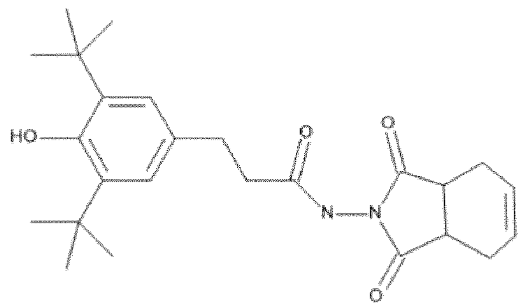

.

**8.** The thermoplastic polyurethane of claim 7, further comprising an additive selected from the group consisting of a defoaming agent, a leveling wetting agent, a thickener, a dispersing agent, wax, a matting powder, an antibacterial

agent, a metal oxide-based light screening agent, a light stabilizer, a thermal stabilizer, a UV absorber, a blue-light absorber, an antioxidant, a peroxide scavenger, a free radical scavenger, a filler, rubber, a food preservative, a flame retardant, a plasticizer, a dye, a pigment, a brightener, an antistatic agent, a fluorescent whitening agent, an antideteriorant, a metal stabilizer, an acid absorbent, an anti-hydrolysis agent, and combinations thereof.

**9.** A method for preparing a thermoplastic polyurethane, which comprises the following steps:

providing the thermoplastic polyurethane precursor of any one of claims 1 to 6; and
subjecting the thermoplastic polyurethane precursor to polymerization to obtain a thermoplastic polyurethane.

**10.** The method of claim 9, further comprising subjecting the thermoplastic polyurethane to pelletizing, extrusion, laminating, injection molding, calendaring, casting, blowing, coating, melt blowing, or fagoting.

**11.** Use of the thermoplastic polyurethane of claim 7 or 8 for preparation of a thermoplastic polyurethane article having low fisheye, a low initial yellowness index, high yellowing resistance, high thermal oxidative aging resistance, and high hydrolysis resistance.

**12.** The use of claim 11, wherein the thermoplastic polyurethane article is selected from the group consisting of a transparent housing, a packaging article, a household article, a textile article, a medical article, a sporting article, an electronic product, an optical product, an architectural article, a mechanical part, an automobile article, a military industrial article, and a coating.

A thermoplastic polyurethane precursor is provided. The thermoplastic polyurethane precursor can be used to prepare a polyurethane having a low initial yellowness index, high yellowing resistance, high thermal oxidative aging resistance, high hydrolysis resistance, and low fisheye. The thermoplastic polyurethane precursor comprises a polyisocyanate, a chain extender, a polymer polyol, and a first auxiliary agent, wherein the first auxiliary agent comprises:

(d1) benzenepropanoic acid, 3,5-bis(1,1-dimethylethyl)-4-hydroxy-C7-C9 branched alkyl esters;
(d2) phosphorous acid, mixed 2,4-bis(1,1-dimethylpropyl)phenyl and 4-(1,1-dimethylpropyl)phenyl triesters;
(d3) 4-tert-butyl-2-(5-tert-butyl-2-oxo-3H-benzofuran-3-yl)phenyl-3,5-di-tert-butyl-4 -hydroxybenzoate; and
(d4) at least one of a compound of formula (I) and a compound of formula (II),

[Formula (I)]

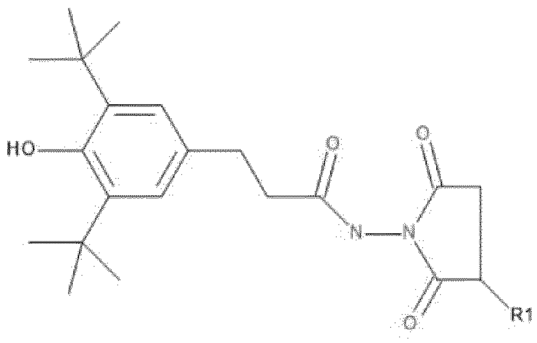

,

wherein R1 is a C12 alkenyl;

[Formula (II)]

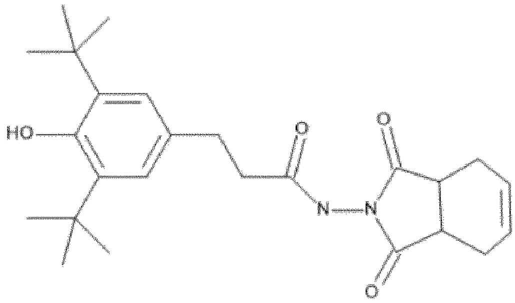

.

**INTERNATIONAL SEARCH REPORT**

International application No.
**PCT/CN2023/107453**

**A. CLASSIFICATION OF SUBJECT MATTER**

C08G18/40(2006.01)i; C08G18/00(2006.01)i; C08G18/06(2006.01)i; C08K5/138(2006.01)i; C08K5/22(2006.01)i

According to International Patent Classification (IPC) or to both national classification and IPC

**B. FIELDS SEARCHED**

Minimum documentation searched (classification system followed by classification symbols)

C08G18/-; C08K5/-

Documentation searched other than minimum documentation to the extent that such documents are included in the fields searched

Electronic data base consulted during the international search (name of data base and, where practicable, search terms used)

CNABS, CNTXT, DWPI, VEN, VCN, ENTXTC, WPABSC, CNKI, WOTXT, ISI-WEB OF SCIENCE, STN, 万方, WANFANG: 奇钛科技, 郑经豪, 吴皇旻, 张玮骏, 黄怡硕, 吴其峰, 罗德顺, 陈锡元, 江彦辉, 宋炜晟, 热塑性, 聚氨酯, 异氰酸酯, 多元醇, 聚醚, 聚酯, 聚碳酸酯, 异氰酸酯, 扩链剂, 抗氧剂, d1结构式, d1 structural formula, d2结构式, d2 structural formula, d3结构式, d3 structural formula, d4结构式, d4 structural formula, 125643-61-0, 1135, 939402-02-5, 12604240-30-5, 501, Thermoplastic polyurethane, TPU, polyether, polyol, polyester, polycarbonate, isocyanate, chain extender, antioxidant, antioxygen

**C. DOCUMENTS CONSIDERED TO BE RELEVANT**

| Category* | Citation of document, with indication, where appropriate, of the relevant passages | Relevant to claim No. |
|---|---|---|
| A | CN 113754858 A (NINGBO SOLARTRON TECHNOLOGY CO., LTD.) 07 December 2021 (2021-12-07)<br>description, paragraphs 0012 and 0022 | 1-12 |
| A | WO 2022194672 A1 (FRAUNHOFER GES FORSCHUNG) 22 September 2022 (2022-09-22)<br>description, page 15 | 1-12 |
| A | CN 112011086 A (DOUBLE BOND CHEMICAL (SHANGHAI) CO.,LTD.) 01 December 2020 (2020-12-01)<br>description, paragraph 0037 | 1-12 |
| A | CN 115948142 A (SHANGHAI HUI DE SCIENCE & TECHNOLOGY SHARES CO., LTD.) 11 April 2023 (2023-04-11)<br>claims 1-2 | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 September 2023** | **18 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

## INTERNATIONAL SEARCH REPORT

International application No.
**PCT/CN2023/107453**

**C. DOCUMENTS CONSIDERED TO BE RELEVANT**

| Category* | Citation of document, with indication, where appropriate, of the relevant passages | Relevant to claim No. |
|---|---|---|
| A | CN 115612052 A (HEFEI GENIUS ADVANCED MATERIAL CO., LTD.) 17 January 2023 (2023-01-17) claims 1-5 | 1-12 |
| A | CN 102199269 A (LIMING RESEARCH INSTITUTE OF CHEMICAL INDUSTRY) 28 September 2011 (2011-09-28) description, paragraphs 0005-0038 | 1-12 |
| A | CN 102675269 A (CHITEC TECHNOLOGY CO., LTD. et al.) 19 September 2012 (2012-09-19) With regard to claim 4, | 1-12 |

Form PCT/ISA/210 (second sheet) (July 2022)

**INTERNATIONAL SEARCH REPORT**
**Information on patent family members**

International application No.
**PCT/CN2023/107453**

| Patent document cited in search report | | | Publication date (day/month/year) | Patent family member(s) | | | Publication date (day/month/year) |
|---|---|---|---|---|---|---|---|
| CN | 113754858 | A | 07 December 2021 | None | | | |
| WO | 2022194672 | A1 | 22 September 2022 | DE | 102021202508 | A1 | 15 September 2022 |
| CN | 112011086 | A | 01 December 2020 | None | | | |
| CN | 115948142 | A | 11 April 2023 | None | | | |
| CN | 115612052 | A | 17 January 2023 | None | | | |
| CN | 102199269 | A | 28 September 2011 | None | | | |
| CN | 102675269 | A | 19 September 2012 | US | 2012238677 | A1 | 20 September 2012 |
| | | | | US | 8840810 | B2 | 23 September 2014 |
| | | | | JP | 2012193158 | A | 11 October 2012 |
| | | | | JP | 5280501 | B2 | 04 September 2013 |
| | | | | KR | 20120106532 | A | 26 September 2012 |
| | | | | KR | 101338786 | B1 | 06 December 2013 |
| | | | | EP | 2500341 | A1 | 19 September 2012 |
| | | | | EP | 2500341 | B1 | 26 June 2013 |
| | | | | ES | 2426979 | T3 | 28 October 2013 |
| | | | | TW | 201238957 | A | 01 October 2012 |
| | | | | TWI | 403507 | B | 01 August 2013 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 125643-61-0
- *CHEMICAL ABSTRACTS*, 939402-02-5
- *CHEMICAL ABSTRACTS*, 1261240-30-5